# EUROPEAN PATENT APPLICATION

(11) **EP 4 773 529 A1**
(43) Date of publication of application: **08.07.2026**
(21) Application number: 24867212.3
(22) Date of filing: 20.08.2024
(51) Int. Cl.: H04L 1/00

(54) **SIGNAL PROCESSING METHOD AND APPARATUS, ELECTRONIC DEVICE, AND STORAGE MEDIUM**

(30) Priority: 20.09.2023 CN 202311222689
(71) Applicant: ZTE CORPORATION, Shenzhen, Guangdong 518057 (CN)
(72) Inventor: YUAN, Yan, Shenzhen, Guangdong 518057 (CN)
(74) Representative: Ziebig Hengelhaupt Intellectual Property Attorneys Patentanwaltskanzlei PartGmbB
(86) International application number: PCT/CN2024/113417
(87) International publication number: WO 2025/060797

(57) **Abstract**

The embodiments of the present application relate to a signal processing method, a signal processing apparatus, an electronic device and a storage medium. The method includes: loading a client signal into a payload of a signal frame of a service signal using a first loading mode when it is determined that the signal rate of the client signal is not adjusted; loading the client signal into the payload of the signal frame of the service signal using a second loading mode when it is determined that the signal rate of the client signal is adjusted; adjusting the signal rate of the client signal; loading the client signal into the payload of the signal frame of the service signal using the first loading mode; determining a loading mode identifier during the loading process; and storing the loading mode identifier in the overhead of the signal frame of the service signal.

## Description

### CROSS-REFERENCE TO RELATED APPLICATIONS

The present application claims priority to Chinese Patent Application No. 202311222689.8, filed on September 20, 2023, the entire contents of which are incorporated herein by reference.

### TECHNICAL FIELD

The present application relates to the technical field of data communications, and in particular to a signal processing method, a signal processing apparatus, an electronic device and a storage medium.

### BACKGROUND

Lossless bandwidth adjustment of optical data unit (ODU) signals is a core technology of optical transport networks (OTNs). An ODU signal is a fixed-rate signal, i.e., its signal rate is a fixed value, and remains constant over a period of time. However, in some application scenarios, the rate of the ODU signal needs to be changed. This occurs during the process of loading an ODU signal into a higher-rate ODU signal. For example, when a Generic Framing Procedure-based Flexible ODU-n (ODUflex(GFP)-n, where GFP stands for Generic Framing Procedure, n = 1~80, and n represents the rate of approximately 1.25*n Gbit/s; for example, when n=1, its rate is 1.25 Gbit/s, and when n-2, its rate is 2.5G bit/s) signal is loaded into an ODU4 signal, the value of n may change. For example, the GFP-based Flexible ODU-3 (ODUflex(GFP)-3) signal is initially loaded into the ODU4 signal. Now, it is necessary to change the GFP-based Flexible ODU-3 (ODUflex(GFP)-3) signal to the GFP-based Flexible ODU-32 (ODUflex(GFP)-32) signal, and it is required that the signal is lossless during the signal rate change. The above is the lossless bandwidth adjustment of the GFP-based Flexible ODU signal.

For the GFP-based flexible ODU signal, existing lossless bandwidth adjustment schemes require the rate to change from a1 to a2 over a relatively long period of time, i.e., the rate change value must be 512,000 kbit/s², or 512,000,000 bits per second. For example, if the rate needs to increase by 1 Gbit/s, it takes approximately 2 seconds to complete the rate change. During the process of loading a client signal into a service signal, if it is required to support rate changes in the client signal without loss of data (i.e., no bits are lost or added, and no bit errors occur), the client signal rate generally cannot change abruptly. In other words, the rate of the client signal cannot change drastically in a short period of time. This limitation is mainly determined by the loading mode used to load the client signal into the service signal. If the client signal is loaded into the service signal through the general mapping procedure, since the loading rate of the general mapping procedure must remain constant within one frame, it is possible that the loading rate of the general mapping procedure cannot immediately change after the client signal rate changes. During the loading process, the buffering is required to adapt the client signal rate and the loading rate of the general mapping procedure. This can cause the buffer to increase or decrease by a large number of bits in a short time, resulting in the buffer being empty or full. An empty or full buffer can cause errors in the general mapping procedure, resulting in loss of the client signal. Fine-grained flexible ODU (fgODUflex) signals also support lossless bandwidth adjustment, but they can also support sudden changes in signal rate. To enable lossless rate changes in the client signal after it is loaded into the service signal, there are two existing methods: Method 1 uses an idle mapping procedure, such as the loading method of optical service unit (OSU) signals into ODU signals, which supports lossless bandwidth adjustment of the OSU signals while also supporting sudden changes in signal rate; Method 2 uses a simplified general mapping procedure, such as the loading method of fine-grained flexible ODU signals into ODU signals.

However, while the idle mapping procedure in Method 1 allows for buffer emptying during implementation, simplifying buffer management, making it easier to support lossless rate jumps in client signals, and simplifying hardware implementation, its drawbacks are also obvious, including: uneven distribution of client signals within the service signal payload, and the waste of bandwidth due to idle block identification. For example, if the idle block is set to 16 bytes, at least 1 bit is needed to indicate whether each 16-byte block is an idle block or a data block. This results in 1 bit being used for the idle block identification for every 16 bytes, increasing bandwidth waste by 0.78%. Since the overhead in fine-grained flexible ODU signal frames accounts for 0.84%, and the additional 0.78% bandwidth waste in the signal frame payload requires further increasing the signal frame rate or reducing the effective bandwidth of the signal frame payload. Furthermore, the idle mapping procedure cannot guarantee that client signals can be evenly distributed within the service signal, and even distribution implies more stable latency, which is desirable in many applications. In Method 2 above, the simplified general mapping procedure is an improvement on the general mapping procedure. Its advantages are that the client signal is evenly distributed in the payload of the service signal, and the position of the data block and padding block is indicated by the overhead, which saves more bandwidth. At the same time, the simplified general mapping procedure reduces the consumption of buffer capacity by supporting two rates within the duration of a signal frame, thus solving the problem that the general mapping procedure cannot support the sudden change of the client signal rate. However, since the buffer still cannot be empty, its buffer management is complex and the hardware implementation is difficult. In summary, although both Method 1 and Method 2 can achieve lossless rate jump in the client signal, they both have disadvantages. Therefore, a new method is urgently needed to support lossless rate jump of the client signal during the process of loading the client signal into the service signal, and the client signal can maintain a stable delay for most of the time, without wasting too much bandwidth. Furthermore, the hardware implementation is simple, reducing the difficulty of buffer management when the client signal rate jumps.

### SUMMARY

In view of this, in order to solve some or all of the above-mentioned technical problems, embodiments of the present application provide a signal processing method, a signal processing apparatus, an electronic device and a storage medium.

In a first aspect, embodiments of the present application provide a signal processing method, including: in response to determining that a signal rate of a client signal remains unchanged, loading the client signal into a payload of a signal frame of a service signal using a first loading mode; in response to determining that the signal rate of the client signal is adjusted, loading the client signal into the payload of the signal frame of the service signal using a second loading mode; after a duration of loading the client signal using the second loading mode is greater than or equal to a preset duration, adjusting the signal rate of the client signal; after the signal rate of the client signal is adjusted, loading the client signal into the payload of the signal frame of the service signal using the first loading mode; determining, during a process of loading the client signal into the payload of the signal frame of the service signal, a loading mode identifier, where the loading mode identifier is configured to identify whether a current mode of loading the client signal into the payload of the signal frame of the service signal is the first loading mode or the second loading mode; and storing the loading mode identifier in an overhead of the signal frame of the service signal.

In a second aspect, the embodiments of the present application provide a signal processing apparatus, including: a first processing unit, a second processing unit and an overhead processing unit. If it is determined that a signal rate of a client signal remains unchanged, the client signal is loaded into a payload of a signal frame of a service signal through the first processing unit. The first processing unit is configured to: load the client signal into the payload of the signal frame of the service signal using a first loading mode, and load the client signal into the payload of the signal frame of the service signal through the second processing unit if it is determined that the signal rate of the client signal is adjusted. The second processing unit is configured to: load the client signal into the payload of the signal frame of the service signal using a second loading mode, adjust the signal rate of the client signal after a duration of loading the client signal using the second loading mode is greater than or equal to a preset duration, and load the client signal into the payload of the signal frame of the service signal using the first loading mode after adjusting the signal rate of the client signal. The overhead processing unit is configured to: determine a loading mode identifier during a process of loading the client signal into the payload of the signal frame of the service signal, where the loading mode identifier is configured to identify whether a current mode of loading the client signal into the payload of the signal frame of the service signal is the first loading mode or the second loading mode, and store the loading mode identifier in an overhead of the signal frame of the service signal.

In a third aspect, the embodiments of the present application provide an electronic device, including: a memory configured to store a computer program; and a processor configured to execute the computer program stored in the memory. When the computer program is executed, the method of any embodiment of the signal processing method in the first aspect of the present application described above is implemented.

In a fourth aspect, the embodiments of the present application provide a computer-readable storage medium on which a computer program is stored. When the computer program is executed by a processor, the method of any embodiment of the signal processing method in the first aspect described above is implemented.

### BRIEF DESCRIPTION OF THE DRAWINGS

The accompanying drawings, which are incorporated in and form part of this specification, illustrate embodiments consistent with the present application and, together with the description, serve to explain the principles of the present application.

To more clearly illustrate the technical solutions in the embodiments of the present application or in the related art, the drawings used in the description of the embodiments or the related art will be briefly introduced below. Obviously, for those skilled in the art, other drawings can be obtained based on these drawings without creative effort.

One or more embodiments are illustrated by way of example with reference numerals in the accompanying drawings. These illustrations do not constitute a limitation on the embodiments. Elements with the same reference numerals in the drawings are denoted as similar elements. Unless otherwise stated, the figures in the drawings are not to be limited by scale.
FIG. 1 is a schematic flowchart of a signal processing method according to an embodiment of the present application.
FIG. 2 is a schematic diagram of an ODU signal frame structure involved in the signal processing method according to an embodiment of the present application.
FIG. 3 is a schematic diagram showing that a payload of a signal frame of an ODU 2 signal is divided into 952 time slots according to the embodiment of the present application.
FIG. 4 is a schematic diagram of dividing idle mapping procedure bit blocks in a signal frame payload of a fine-grained optical data branch unit signal according to an embodiment of the present application.
FIG. 5 is a schematic diagram of a signal processing apparatus according to an embodiment of the present application.
FIG. 6 is a schematic structural diagram of an electronic device according to an embodiment of the present application.

### DETAILED DESCRIPTION OF THE EMBODIMENTS

Various exemplary embodiments of the present application will now be described in detail with reference to the accompanying drawings. Obviously, the described embodiments are only a part of the embodiments of the present application, and not all of them. It should be noted that, unless otherwise specifically stated, the relative arrangement, numerical expressions, and values of the components and steps set forth in these embodiments do not limit the scope of the present application.

Those skilled in the art can understand that terms "first" and "second" in the embodiments of the present application are only used to distinguish different steps, devices or modules, and do not represent any specific technical meaning or logical order between them.

It should also be understood that in this embodiment, "a plurality of' can refer to two or more, and "at least one" can refer to one, two or more.

It should also be understood that any component, data or structure mentioned in the embodiments of the present application can generally be understood as one or more unless explicitly defined or given contrary guidance in the context.

Furthermore, the term "and/or" in the present application is merely a description of the relationship between related objects, indicating that three relationships can exist. For example, A and/or B can represent: A existing alone, A and B existing simultaneously, or B existing alone. Additionally, the character "/" in the present application generally indicates that the preceding and following related objects have an "or" relationship.

It should also be understood that the description of the various embodiments in the present application emphasizes the differences between the various embodiments, and the similarities or similarities can be referred to each other. For the sake of brevity, they will not be described in detail.

The following description of at least one exemplary embodiment is merely illustrative and is in no way intended to limit the scope of the present application and its application or use.

Techniques, methods, and devices known to those skilled in the art may not be discussed in detail, but where appropriate, such techniques, methods, and devices should be considered part of the specification.

It should be noted that similar labels and letters in the following drawings indicate similar items; therefore, once an item is defined in one figure, it does not need to be discussed further in subsequent figures.

Where there is no conflict, the embodiments and features described in the present application can be combined with each other. To facilitate understanding of the embodiments of the present application, the present application will be described in detail below with reference to the accompanying drawings and embodiments. Obviously, the described embodiments are only some, not all, of the embodiments of the present application. All other embodiments obtained by those skilled in the art based on the embodiments of the present application without creative effort are within the scope of the present application.

In the process of loading a client signal into a service signal, and when it is necessary to support lossless rate jumps in client signals, existing technologies either result in uneven distribution of client signals in the service signal payload and increased bandwidth waste of the service signal, or require simplification of the general mapping procedure to support two rates simultaneously in a single signal frame, leading to complex buffer management and complex hardware implementation. The present application provides a signal processing method that supports lossless rate jumps in the client signal during the process of loading the client signal into the service signal. In most cases, the client signal is evenly distributed in the service signal payload, without increasing bandwidth waste of the service signal, and simplifies buffer management during the rate adjustment, making hardware implementation simpler.

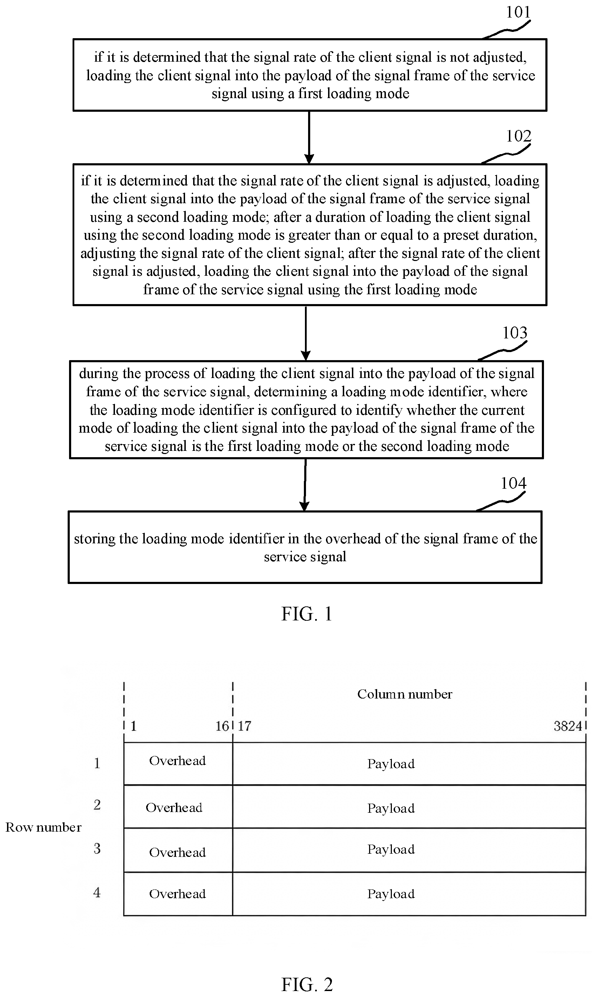

FIG. 1 is a schematic flowchart of a signal processing method according to an embodiment of the present application. This method can be applied to an electronic device.

As shown in FIG. 1, the method specifically includes the following steps.

Step 101, if it is determined that the signal rate of the client signal is not adjusted, loading the client signal into the payload of the signal frame of the service signal using a first loading mode.

In this embodiment, the service signal is based on signal frames, and is composed of signal frames, which include overhead and payload. As an example, please refer to FIG. 2, FIG. 2 is a schematic diagram of an ODU signal frame structure involved in a signal processing method according to an embodiment of the present application.

In practice, a signal can be composed of multiple binary bits in sequence; that is, a signal is a binary bit stream. The bit values in the binary bit stream conform to certain rules, and these rules are called signal frames. All signals in an optical transport network (OTN) are constructed based on signal frames. During the process of loading a client signal into a service signal, the rates of the client signal and the service signal remain constant in most cases. In special cases, it is permissible to change the rate of the client signal. However, when changing the rate of the client signal, the client signal is loaded into the service signal. When changing the rate of the client signal it is required that the client signals be lossless, that is, all bits that make up the client signals cannot be added or reduced, and no bit errors can occur.

The first loading mode should ensure that the client signal is evenly distributed in the payload of the service signal and save the bandwidth of the service signal as much as possible. The first loading mode does not need to consider supporting lossless rate adjustment of the client signal.

Step 102, if it is determined that the signal rate of the client signal is adjusted, loading the client signal into the payload of the signal frame of the service signal using a second loading mode; after a duration of loading the client signal using the second loading mode is greater than or equal to a preset duration, adjusting the signal rate of the client signal; after the signal rate of the client signal is adjusted, loading the client signal into the payload of the signal frame of the service signal using the first loading mode.

In this embodiment, to adjust the rate of the client signal, the loading mode is first switched from the first loading mode to the second loading mode. Then, wait for a short period of time (i.e., the preset time mentioned above) before adjusting the rate. During the waiting period, the rate of the client signal remains unchanged. After the waiting period ends, the rate of the client signal is adjusted. The rate adjustment can be completed in a very short time. That is, it supports lossless rate change of the client signal. The rate adjustment needs to continue for a period of time. After the rate adjustment is completed, wait for a while until the adjusted rate is completely stable before switching to the first loading mode.

The second loading mode does not need to ensure that the client signal is evenly distributed in the service signal payload, and it can also waste some bandwidth, making the loading rate of the client signal lower than the rate of the client signal. The second loading mode prioritizes using the simplest hardware to implement lossless rate change of the client signal. Since the management of the buffer used to achieve rate adaptation will become very complicated during the lossless rate change of the client signal, the buffer management of the second loading mode should be as simple as possible.

Step 103, during the process of loading the client signal into the payload of the signal frame of the service signal, determining a loading mode identifier, where the loading mode identifier is configured to identify whether the current mode of loading the client signal into the payload of the signal frame of the service signal is the first loading mode or the second loading mode.

In this embodiment, it can be understood that after the client signal is loaded into the payload of the signal frame of the service signal, it is also necessary to extract the client signal from the payload of the signal frame of the service signal. Since two different loading modes may be used during loading, the loading mode also needs to be known during extraction, and then the appropriate extraction method is selected according to the loading mode.

Step 104, storing the loading mode identifier in the overhead of the signal frame of the service signal.

In this embodiment, it can be understood that the loading mode identifier is stored in the specific overhead of the signal frame of the service signal. The loading mode of the current signal frame can be indicated by the specific overhead of the current signal frame of the service signal, and the loading mode of the next signal frame can also be indicated by the specific overhead of the current signal frame of the service signal. When the client signal is retrieved from the payload of the signal frame of the service signal, the loading mode identifier is first obtained from the specific overhead of the signal frame of the service signal to identify the loading mode, and then the client signal is extracted from the payload of the signal frame of the service signal according to the corresponding extraction method.

In some implementations of this embodiment, during the process of loading the client signal into the payload of the signal frame of the service signal using the second loading mode, when the signal rate of the client signal is higher than the highest rate that the second loading mode can provide, a buffer is used to temporarily store the bits of the client signal that cannot be loaded in time.

It can be understood that, since the client signal supports lossless rate change, meaning the time for the client signal to change rate is relatively short, the time for using the second loading mode is also relatively short. Moreover, since the client signal rate is only slightly higher than the maximum rate that the second loading mode can provide, the cache usage will not be too high.

In some application scenarios of the above implementation, the first loading mode can be used to load the client signal into the payload of the signal frame of the service signal in the following manner.

If, during the process of loading the client signal into the payload of the signal frame of the service signal using the second loading mode, the buffer stores bits of the client signal that cannot be loaded in time, then after the client signal rate adjustment is completed, during the process of loading the client signal into the payload of the signal frame of the service signal using the first loading mode, the loading rate of the first loading mode is increased within a predetermined time range to load the bits of the client signal that cannot be loaded in time stored in the buffer into the payload of the signal frame of the service signal. After the predetermined time range ends, the loading rate of the first loading mode is restored so that the loading rate of the first loading mode is consistent with the signal rate of the client signal.

It can be understood that within a predetermined time range, the loading rate of the first loading mode can be appropriately increased to gradually load the bits of the client signal that cannot be loaded in time and stored in the buffer into the payload of the signal frame of the service signal, gradually reducing the number of bits in the buffer. After the predetermined time range ends, the number of bits in the buffer will remain at a relatively ideal level, and the loading rate of the first loading mode will be restored so that the loading rate of the first loading mode is consistent with the signal rate of the client signal.

In some implementations of this embodiment, the client signal is loaded into the payload of the signal frame of the service signal using the first loading mode in the following manner.

First, the client signal is directly loaded into the payload of the signal frame of the service signal using the first loading mode to generate the first loading mode overhead.

Then, the first loading mode overhead is loaded into the overhead of the signal frame of the service signal.

It can be understood that the first loading mode overhead is related to the specific implementation of the first loading mode. Generally, specific overhead is generated during the signal loading process, and such specific overhead related to the loading mode is the first loading mode overhead.

In some implementations of this embodiment, the client signal is loaded into the payload of the signal frame of the service signal using the first loading mode in the following manner.

First, the client signal is loaded into the payload of the signal frame of the intermediate frame using the first loading mode to generate the first loading mode overhead.

Then, the first loading mode overhead is loaded into the overhead of the signal frame of the intermediate frame, the payload of the signal frame of the intermediate frame is loaded into the payload of the signal frame of the service signal, and the overhead of the signal frame of the intermediate frame is loaded into the overhead of the signal frame of the service signal.

It can be understood that the intermediate frame signal is a signal based on the signal frame. If it is necessary to load a plurality of client signals into the payload of the signal frame of a service signal, it is generally necessary to first load a client signal into the payload of the signal frame of an intermediate frame signal. Each client signal is loaded into an intermediate frame signal, and the payloads of the signal frames of multiple intermediate frame signals are loaded into the payload of the signal frame of a service signal. At this time, the intermediate frame signal actually corresponds to a part of the content of multiple consecutive signal frames of the service signal.

In some implementations of this embodiment, the client signal is loaded into the payload of the signal frame of the service signal using the second loading mode in the following manner.

First, the client signal is directly loaded into the payload of the signal frame of the service signal using the second loading mode to generate the second loading mode overhead.

Then, the second loading mode overhead is loaded into the overhead of the signal frame of the service signal.

It can be understood that the second loading mode overhead is related to the specific implementation of the second loading mode. Generally, some specific overhead is generated during the signal loading process, and such specific overhead related to the loading mode is the second loading mode overhead.

In some implementations of this embodiment, the client signal is loaded into the payload of the signal frame of the service signal using the second loading mode in the following manner.

First, the client signal is loaded into the payload of the signal frame of the intermediate frame using the second loading mode to generate the second loading mode overhead.

Then, the second loading mode overhead is loaded into the overhead of the signal frame of the intermediate frame, the payload of the signal frame of the intermediate frame is loaded into the payload of the signal frame of the service signal, and the overhead of the signal frame of the intermediate frame is loaded into the overhead of the signal frame of the service signal.

It can be understood that the intermediate frame signal is a signal based on the signal frame. If it is necessary to load multiple client signals into the payload of the signal frame of a service signal, it is generally necessary to first load a client signal into the payload of the signal frame of an intermediate frame signal. Each client signal is loaded into an intermediate frame signal, and the payloads of the signal frames of multiple intermediate frames are loaded into the payload of the signal frame of a service signal. At this time, the intermediate frame signal actually corresponds to a part of the content of multiple consecutive signal frames of the service signal.

In some implementations of this embodiment, the client signal is loaded into the payload of the signal frame of the service signal using the first loading mode or the second loading mode in the following manner.

First, the payload of the signal frame of the service signal is divided into n time slots.

Where n is an integer greater than 0.

Then, based on the signal rate of the client signal, m time slots are selected from the n time slots.

Where m is an integer greater than 0 and less than or equal to n.

It can be understood that, dividing the payload of the signal frame of the service signal into n time slots allows for the simultaneous loading of multiple client signals. After dividing the payload of the signal frame of the service signal into n time slots, one time slot can be used to load client signals with a rate lower than that of a single time slot. The rate of one time slot is equal to the rate of the payload of the signal frame of the service signal divided by n, i.e., the rate of one time slot is 1/n of the rate of the payload of the signal frame of the service signal. When loading multiple client signals into these time slots, an integer m is selected based on the rate of the client signals, and the client signals are loaded into m time slots. During the loading of client signals, any time slot can only be occupied by one client signal; more than one client signal is not allowed to share a single time slot.

In the above implementation, when the client signal is loaded into the payload of the signal frame of the service signal using the first loading mode, the client signal can be loaded into the m time slots of the payload of the signal frame of the service signal through the first loading mode. When the client signal is loaded into the payload of the signal frame of the service signal using the second loading mode, the client signal can be loaded into the m time slots of the payload of the signal frame of the service signal through the second loading mode.

In some application scenarios of the above implementation, the client signal is loaded into the m time slots of the payload of the signal frame of the service signal in the following manner: the client signal is directly loaded into the m time slots of the payload of the signal frame of the service signal.

It can be understood that, in the above application scenario, the client signal can be directly loaded into the m time slots of the payload of the signal frame of the service signal.

In some application scenarios of the above implementation, the client signal can also be loaded into the m time slots of the payload of the signal frame of the service signal in the following manner: the client signal is loaded into the payload of the signal frame of the intermediate frame, and the payload of the signal frame of the intermediate frame is loaded into the m time slots of the payload of the signal frame of the service signal.

It can be understood that, in the above application scenario, the client signal can first be loaded into the payload of the signal frame of the intermediate frame, and then the payload of the signal frame of the intermediate frame can be loaded into the m time slots of the payload of the signal frame of the service signal.

In some implementations of this embodiment, the first loading mode is a general mapping procedure, or the first loading mode is a simplified general mapping procedure.

It can be understood that the first loading mode should ensure that the client signal is evenly distributed in the payload of the service signal and save the bandwidth of the service signal as much as possible. The first loading mode does not need to consider supporting changes in the rate of the client signal.

In some implementations of this embodiment, the second loading mode is an idle mapping procedure.

It can be understood that the second loading mode should support lossless rate jumps in client signals and should minimize the difficulty of buffer management. At the same time, it is not necessary to ensure that client signals are evenly distributed in the payload of service signals, and it is not necessary to consider saving bandwidth of service signals as much as possible.

In some application scenarios of the above implementation, the client signal is loaded into the payload of the signal frame of the service signal using the second loading mode in the following manner.

The client signal is directly loaded into the payload of the signal frame of the service signal through the idle mapping procedure. An idle mapping procedure bit block is defined, and the idle mapping procedure bit block corresponds to a predetermined number of consecutive bits in the payload of the signal frame of the service signal. The payload of p consecutive signal frames of the service signal is divided into q idle mapping procedure bit blocks, where p and q are integers greater than 0. The idle mapping procedure bit block includes a 1-bit idle identifier, which indicates that the idle mapping procedure bit block is configured to load the bits of the client signal or as a padding bit block.

It can be understood that, assuming the length of the idle mapping procedure bit block is r bits, where r is an integer greater than 0,, and assuming the payload of the signal frame of the service signal includes s bits, where s is an integer greater than 0, if s is divisible by r, then the payload of the signal frame of the service signal is divided into q idle mapping procedure bit blocks, at this point, p= 1 and q = s/r; if s is not divisible by r, then a suitable integer p is chosen such that p*s is divisible by r, and the payload of the signal frame of p consecutive service signals is divided into q idle mapping procedure bit blocks, where q = p*s/r. In summary, the payload of the signal frame of p consecutive service signals can be divided into an integer number of idle mapping procedure bit blocks.

In some of the above application scenarios, the following steps can also be performed.

First, positioning information is generated to indicate the idle mapping procedure bit block.

The positioning information is then stored in the overhead of the signal frame of the service signal.

It can be understood that, if p is equal to 1, the payload of the signal frame of a service signal can be divided into an integer number of idle mapping procedure bit blocks. Therefore, there is no need to indicate the positioning information of the idle mapping procedure bit blocks in the payload of the signal frame. However, if p is greater than 1, it is necessary to indicate the positioning information of the idle mapping procedure bit blocks in the payload of the signal frame. For example, the positioning information can be defined as offset information of the first bit in the payload of the signal frame in a certain idle mapping procedure bit block. According to the above definition, assuming that in a certain signal frame, the first bit of the payload of the signal frame is located in the first bit of a certain idle mapping procedure bit block, then the value 1 is used as the positioning information; assuming that in a certain signal frame, the first bit of the payload of the signal frame is located in the second bit of a certain idle mapping procedure bit block, then the value 2 is used as the positioning information; and so on. Assuming that in a certain signal frame, the first bit of the payload of the signal frame is located in the w-th bit of a certain idle mapping procedure bit block, where w is an integer greater than 0 and less than or equal to r, then the value w is used as the positioning information. The above positioning information can appear once per signal frame, once per line of signal frames, or once every u signal frames, where u is an integer greater than 1.

In some application scenarios of the above implementation, the following method can also be used: using the second loading mode, the client signal is loaded into the payload of the signal frame of the service signal.

First, the client signal is loaded into the payload of the signal frame of the intermediate frame through the idle mapping procedure. An idle mapping procedure bit block is defined, and the idle mapping procedure bit block corresponds to a predetermined number of consecutive bits in the payload of the signal frame of the intermediate frame signal. The payload of the signal frames of the p consecutive intermediate frame signals is divided into q idle mapping procedure bit blocks.

Where p and q are integers greater than 0, and the idle mapping procedure bit block includes a 1-bit idle identifier, which indicates that the idle mapping procedure bit block is used to store the bits of the client signal or as a padding bit block.

Then, the payload of the intermediate frame signal is loaded into the payload of the signal frame of the service signal.

It can be understood that in the above application scenario, the idle mapping procedure can be used to load the client signal into the payload of the signal frame of the intermediate frame, and then load the payload of the intermediate frame signal into the payload of the signal frame of the service signal. The idle flag is used to distinguish whether the idle mapping procedure bit block is used to load the bits of the client signal or as a padding bit block.

In some of the above application scenarios, the following steps can also be performed.

First, the positioning information is generated to indicate the idle mapping procedure bit block.

Then, the positioning information is stored in the overhead of the signal frame of the intermediate frame.

Then, the overhead of the signal frame of the intermediate frame is loaded into the overhead of the signal frame of the service signal.

It can be understood that if p is equal to 1, the payload of the signal frame of one intermediate frame signal can be divided into an integer number of idle mapping procedure bit blocks, so there is no need to indicate the positioning information of the idle mapping procedure bit blocks in the payload of the signal frame of the intermediate frame signal. However, if p is greater than 1, it is necessary to indicate the positioning information of the idle mapping procedure bit blocks in the payload of the signal frame of the intermediate frame signal. For specific implementation, refer to the method for generating the positioning information of the idle mapping procedure bit blocks when the client signal is directly loaded into the payload of the signal frame of the service signal.

It can be understood that, under the above circumstances, when the client signal is first loaded into the overhead of the signal frame of the intermediate frame through the idle mapping procedure, and then the overhead of the signal frame of the intermediate frame is loaded into the payload of the signal frame of the service signal, the positioning information can be stored first in the overhead of the signal frame of the intermediate frame, and then stored in the overhead of the signal frame of the service signal.

In some implementations of this embodiment, when the client signal is directly loaded into the payload of the signal frame of the service signal, the loading mode identifier is stored in the overhead of the signal frame of the service signal.

In some implementations of this embodiment, when the client signal is loaded into the payload of the signal frame of the intermediate frame, the loading mode identifier is stored in the overhead of the signal frame of the intermediate frame signal, and the overhead of the signal frame of the intermediate frame is loaded into the overhead of the signal frame of the service signal.

In the signal processing method according to the embodiments of the present application, when it is determined that the signal rate of the client signal is not adjusted, the client signal is loaded into the payload of the signal frame of the service signal using a first loading mode; when it is determined that the signal rate of the client signal is adjusted, the client signal is loaded into the payload of the signal frame of the service signal using a second loading mode. After the duration of loading the client signal using the second loading mode is greater than or equal to a preset duration, the signal rate of the client signal is adjusted. After the signal rate of the client signal is adjusted, the client signal is loaded into the payload of the signal frame of the service signal using the first loading mode. During the process of loading the client signal into the payload of the signal frame of the service signal, a loading mode identifier is determined. The loading mode identifier is configured to identify whether the current method of loading the client signal into the payload of the signal frame of the service signal is the first loading mode or the second loading mode. The loading mode identifier is stored in the overhead of the signal frame of the service signal. Therefore, it can support lossless rate jumps in client signals. In most cases, client signals are evenly distributed in the payload of the service signal, which can not increase the bandwidth waste of the service signal. Moreover, the cache management is simple and the hardware implementation is simpler.

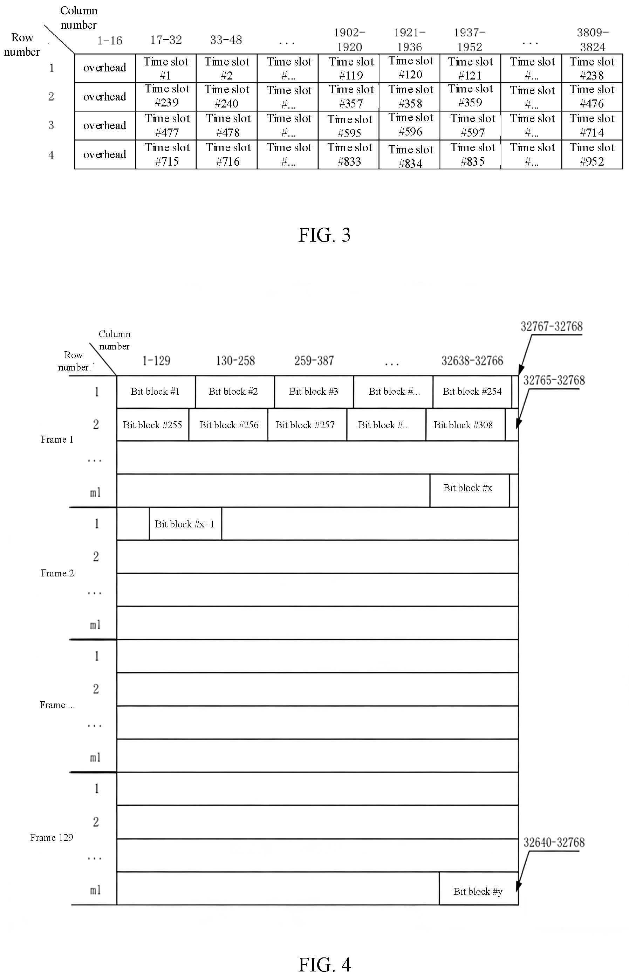

The following example illustrates how to load fine-grained flexible ODU signals into ODU signals and achieve lossless rate jumps in the fine-grained flexible ODU signals. In this example, the client signal is a fine-grained flexible ODU signal, and the service signal is an ODU signal. The signal frame of the ODU signal consists of 15296 bytes, with each byte consisting of 8 bits. The 15296 bytes of the signal frame are arranged in 4 rows and 3824 columns. That is, the signal frame of the ODU signal is composed of 4 rows and 3824 columns of bytes, of which the first 16 columns are overhead, and the last 3808 columns are payload, as shown in FIG. 2. The payload of the signal frame of the ODU signal is divided into n time slots. The value of n is related to the rate of the ODU signal. For example, the payload of the signal frame of an ODU2 signal is divided into 952 time slots, each time slot being 16 bytes in length. The payload of the signal frame of an ODU2 signal contains 15232 bytes, and 952 time slots are exactly equal to 15232 bytes. Therefore, all bytes of the payload of one signal frame are divided into 952 time slots, as shown in FIG. 3. FIG. 3 is a schematic diagram illustrating the payload of the signal frame of an ODU2 signal is divided into 952 time slots.

To load the fine-grained flexible ODU signal into the payload of the signal frame of the ODU2 signal, the number of time slots is first selected based on the signal rate of the fine-grained flexible ODU signal. The payload rate of the signal frame of the ODU2 signal is approximately 9.995 Gbit/s, and it is divided into 952 time slots. Therefore, the rate of one time slot is approximately 10.5 Mbit/s, and the signal rate of the fine-grained flexible ODU signal is approximately m * 10.4 Mbit/s, where m is an integer greater than 0. Thus, the fine-grained flexible ODU signal occupies m time slots when loading the ODU signal. To load the fine-grained flexible ODU signal into the payload of the signal frame of the ODU signal, it is necessary to first load the fine-grained flexible ODU signal into a fine grain optical data tributary unit (fgODTU) signal. The fgODTU signal also composed of signal frames, and the signal frame includes overhead and payload. Since the fgODTU signal is located between the client signal and the service signal, the present application also refers to it as an intermediate frame signal, i.e., a frame-based signal located between the client signal and the service signal. The payload of the signal frame of the fgODTU signal consists of m*4096 bytes, where m is the number of time slots occupied when the fine-grained flexible ODU signal is loaded into the ODU signal. The payload of the signal frame of the fgODTU signal consists of 12 bits.

When it is not necessary to adjust the rate of the fine-grained flexible ODU signal, the fine-grained flexible ODU signal is loaded into the payload of the signal frame of the fgODTU signal using a simplified general mapping procedure, generating a simplified general mapping procedure overhead. The simplified general mapping procedure overhead identifies how many 16-byte blocks are used to load the fine-grained flexible ODU signal in the payload of the signal frame of the fgODTU signal. Based on the number of these 16-byte blocks and the Sigma-Delta justification distribution, the specific location of each 16-byte block can be calculated. The simplified general mapping procedure overhead is loaded into the overhead of the payload of the signal frame of the fgODTU signal. The payload of the signal frame of the fgODTU signal is loaded into m time slots of the payload of the signal frame of the ODU2 signal. Finally, the overhead of the signal frame of the fgODTU signal is loaded into the overhead of the signal frame of the ODU2 signal.

When it is necessary to adjust the rate of the fine-grained flexible ODU signal, for example, to adjust the rate of the fine-grained flexible ODU signal from m1*10.4 Mbits/second to m2*10.4 Mbits/second, where both m1 and m2 are integers greater than 0, the rate of the fine-grained flexible ODU signal is first kept unchanged, that is, the rate remains at m1*10.4 Mbits/second. The idle mapping procedure is used to load the fine-grained flexible ODU signal into the payload of the signal frame of the fgODTU signal. The switching of the loading mode is performed at the frame header of the signal frame of the fgODTU signal. That is, the loading mode of the current frame is the simplified general mapping procedure, and the loading mode is switched to the idle mapping procedure at the frame header of the next frame. The length of the idle mapping procedure bit block is defined as 129 bits. Each idle mapping procedure bit block corresponds to 129 consecutive bits in the payload of the signal frame of the fgODTU signal. The payload of the signal frames of 129 consecutive fgODTU signals is divided into 4096*8*m1 idle mapping procedure bit blocks, as shown in FIG. 4. In FIG. 4, the payload of the signal frame of a fgODTU signal contains 32768*m1 bits, which are arranged in m1 rows and 32768 columns, with each unit being 1 bit. All the payloads of the signal frames of 129 consecutive fgODTU signals are divided into 129 consecutive bits, resulting in 32768*m1 129-bit blocks, where each 129-bit block corresponds to one idle mapping procedure bit block. In FIG. 4, x = int(m1*32768/129), where int() represents the rounding operation, and y = 32768*m1. The idle mapping procedure bit block includes a 1-bit idle flag and a 128-bit payload. The 1-bit idle flag indicates that the payload of the idle mapping procedure bit block is used to store 128 bits of fine-grained flexible ODU signal or as a padding bit block. For example, a 1-bit idle flag of 0 indicates that the payload in the current idle mapping procedure bit block is padding information, and a 1-bit idle flag of 1 indicates that the payload in the current idle mapping procedure bit block is used to store 128 bits of fine-grained flexible ODU signal. The positioning information is generated to indicate the idle mapping procedure bit block. The positioning information indicates which bit in a certain idle mapping procedure bit block the first bit in the payload of the signal frame of the fgODTU signal is located in. For example, if the first bit of the payload of the signal frame of the fgODTU signal is located in the first bit of a certain idle mapping procedure bit block, then the positioning information is 1; if the first bit of the payload of the signal frame of the fgODTU signal is located in the j-th bit of a certain idle mapping procedure bit block, where j is an integer greater than 0 and less than 130, then the positioning information is j. The positioning information used to indicate the idle mapping procedure bit block is used as the overhead of the idle mapping procedure. The idle mapping procedure overhead is loaded into the overhead of the signal frame of the fgODTU signal, the payload of the signal frame of the fgODTU signal is loaded into m1 time slots of the payload of the signal frame of the ODU2 signal, and the overhead of the signal frame of the fgODTU signal is loaded into the overhead of the signal frame of the ODU2 signal.

The fine-grained flexible ODU signal with a rate of m1 * 10.4 Mbit/s is loaded into the payload of the signal frame of the fgODTU signal using the idle mapping procedure. Then, the payload of the signal frame of the fgODTU signal is loaded into m1 time slots of the payload of the signal frame of the ODU2 signal. After the above process continues for a period of time, the rate of the fine-grained flexible ODU signal is adjusted, that is, the rate of the fine-grained flexible ODU signal is changed from m1 * 10.4 Mbit/s to m2 * 10.4 Mbit/s. This rate change can be completed in a very short time, that is, it supports abrupt rate changes. Since the frame length of the signal frame of the fgODTU signal changes along with the rate change, it can be required that if it is necessary to increase the rate, i.e., m2 > m1, the rate of the FODU signal should be changed first. The rate change is performed at the frame boundary. That is, when a fgODTU signal frame with a frame length of m1*4096 bytes ends, a new fgODTU signal frame with a frame length of m2*4096 bytes begins. At the same time as the frame length changes, the signal frame rate of the fgODTU signal increases. After the rate of the fgODTU signal frame has increased, the rate of the fine-grained flexible ODU signal is increased. Similarly, if it is necessary to reduce the rate (i.e., m2 < m1), the rate of the fine-grained flexible ODU signal is first changed. After the rate of the fine-grained flexible ODU signal is reduced, the rate of the fgODTU signal is reduced. The rate change is performed at the frame boundary. That is, after a signal frame of fgODTU signal with a frame length of m1*4096 bytes ends, a new signal frame of fgODTU signal with a frame length of m2*4096 bytes begins. The signal frame rate of the fgODTU signal is reduced simultaneously with the change in frame length. After the above processing, once the rates of both the fine-grained flexible ODU signal and the fgODTU signal have been changed, the fine-grained flexible ODU signal with a rate of m2* 10.4 Mbit/s is loaded into the payload of the signal frame of the fgODTU signal using the simplified general mapping procedure. The switching of the loading mode is performed at the frame header of the signal frame of the fgODTU signal; that is, the loading mode for the current frame is the idle mapping procedure, and the loading mode is switched to the simplified general mapping procedure at the frame header of the next frame. At this point, the entire rate adjustment process is completed.

After loading the fine-grained flexible ODU signal into the payload of the signal frame of the ODU2 signal, it is necessary to extract the fine-grained flexible ODU signal from the payload of the signal frame of the ODU2 signal. Therefore, after loading the fine-grained flexible ODU signal into the payload of the signal frame of the ODU2 signal, it is also necessary to define a loading mode identifier overhead to identify the loading mode of the current fine-grained flexible ODU signal. The loading mode identifier overhead is defined as 1 bit and is located in the overhead of the signal frame of the fgODTU signal. A value of 0 indicates that the loading mode in the signal frame of the fgODTU signal in the next frame is the simplified general mapping procedure, and a value of 1 indicates that the loading mode in the signal frame of the fgODTU signal in the next frame is the idle mapping procedure. Finally, the loading mode identifier overhead can be loaded into the overhead of the signal frame of the ODU2 signal.

When the fine-grained flexible ODU signal is loaded into the payload of the signal frame of the fgODTU signal using the idle mapping procedure, approximately 0.78% of the bandwidth is wasted because one bit out of every 129 bits in the payload of the signal frame of the fgODTU signal is used for a 1-bit idle flag. If the serving signal is an ODU0 signal, even if all idle mapping procedure bit blocks are used to load the fine-grained flexible ODU signal, the bandwidth provided by the idle mapping procedure is still lower than the rate at which the fine-grained flexible ODU signal is loaded. However, since the idle mapping procedure will not be used for a long time during the rate adjustment process, although the maximum bandwidth provided by the idle mapping procedure is lower than the rate at which the fine-grained flexible ODU signal is loaded during this period, the number of bits that cannot be loaded in time can be temporarily stored in the buffer. After the rate adjustment is completed, when the fine-grained flexible ODU signal is loaded using the simplified general mapping procedure, the loading rate of the simplified general mapping procedure can be temporarily increased for a period of time. After the number of excessive bits stored in the buffer is reduced to a reasonable value, the loading rate of the simplified general mapping procedure is restored, that is, the loading rate of the simplified general mapping procedure is made equal to the rate of loading the fine-grained flexible ODU signal.

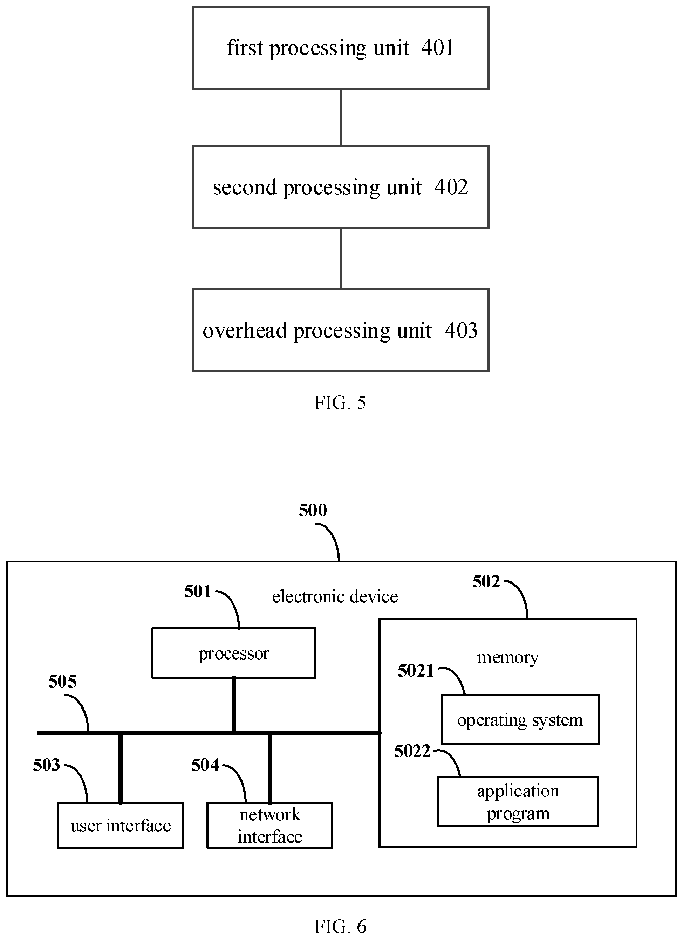

FIG. 5 is a schematic structural diagram of a signal processing apparatus according to an embodiment of the present application.

The apparatus includes a first processing unit 401, a second processing unit 402, and an overhead processing unit 403. When it is determined that the signal rate of the client signal is not adjusted, the client signal is loaded into the payload of the signal frame of the service signal through the first processing unit 401.

The first processing unit 401 is configured to load the client signal into the payload of the signal frame of the service signal using a first loading mode.

If it is determined that the signal rate of the client signal is adjusted, the clientr signal is loaded into the payload of the signal frame of the service signal through the second processing unit 402.

The second processing unit 402 is configured to: load the client signal into the payload of the signal frame of the service signal using a second loading mode; adjust the signal rate of the client signal after loading the client signal for a duration greater than or equal to a preset duration using the second loading mode; and load the client signal into the payload of the signal frame of the service signal using the first loading mode after adjusting the signal rate of the client signal.

The overhead processing unit 403 is configured to: determine an loading mode identifier during the process of loading the client signal into the payload of the signal frame of the service signal, where the loading mode identifier is used to identify whether the current mode for loading the client signal into the payload of the signal frame of the service signal is the first loading mode or the second loading mode; and store the loading mode identifier in the overhead of the signal frame of the service signal.

In an embodiment, during the process of loading the client signal into the payload of the signal frame of the service signal using the second loading mode, if the signal rate of the client signal is higher than the highest rate that the second loading mode can provide, the bits of the client signal that cannot be loaded in time are temporarily stored in a buffer.

In an embodiment, the step of loading the client signal into the payload of the signal frame of the service signal using the first loading mode includes the following steps.

If, during the process of loading the client signal into the payload of the signal frame of the service signal using the second loading mode, the buffer stores bits of the client signal that cannot be loaded in time, then after the client signal rate adjustment is completed, during the process of loading the client signal into the payload of the signal frame of the service signal using the first loading mode, the loading rate of the first loading mode is increased within a predetermined time range to load the bits of the client signal that cannot be loaded in time and are stored in the buffer into the payload of the signal frame of the service signal. After the predetermined time range ends, the loading rate of the first loading mode is restored so that the loading rate of the first loading mode is consistent with the signal rate of the client signal.

In an embodiment, the step of loading the client signal into the payload of the signal frame of the service signal using the first loading mode includes the following steps.

The client signal is directly loaded into the payload of the signal frame of the service signal using the first loading mode, to generate the first loading mode overhead.

The first loading mode overhead is loaded into the overhead of the signal frame of the service signal.

In an embodiment, the step of loading the client signal into the payload of the signal frame of the service signal using the first loading mode includes the following steps.

The client signal is loaded into the payload of the signal frame of the intermediate frame using the first loading mode, to generate the first loading mode overhead.

The first loading mode overhead is loaded into the overhead of the signal frame of the intermediate frame, the payload of the signal frame of the intermediate frame is loaded into the payload of the signal frame of the service signal, and the overhead of the signal frame of the intermediate frame is loaded into the overhead of the signal frame of the service signal.

In an embodiment, the step of loading the client signal into the payload of the signal frame of the service signal using a second loading mode includes the following steps.

The client signal is directly loaded into the payload of the signal frame of the service signal using the second loading mode, to generate the second loading mode overhead.

The second loading mode overhead is loaded into the overhead of the signal frame of the service signal.

In an embodiment, the step of loading the client signal into the payload of the signal frame of the service signal using a second loading mode to includes the following steps.

The client signal is loaded into the payload of the signal frame of the intermediate frame using the second loading mode, to generate the second loading mode overhead.

The second loading mode overhead is loaded into the overhead of the signal frame of the intermediate frame, the payload of the signal frame of the intermediate frame is loaded into the payload of the signal frame of the service signal, and the overhead of the signal frame of the intermediate frame is loaded into the overhead of the signal frame of the service signal.

In an embodiment, the client signal is loaded into the payload of the signal frame of the service signal using the first loading mode or the second loading mode.

The payload of the signal frame of the service signal is divided into n time slots, where n is an integer greater than 0.

Based on the signal rate of the client signal, m time slots are selected from the n time slots, where m is an integer greater than 0 and less than or equal to n.

The client signal is loaded into the m time slots of the payload of the signal frame of the service signal using the first loading mode, or the client signal is loaded into the m time slots of the payload of the signal frame of the service signal using the second loading mode.

In an embodiment, the step of loading the client signal into the m time slots of the payload of the signal frame of the service signal includes the following steps.

The client signal is directly loaded into the m time slots of the payload of the signal frame of the service signal.

Alternatively, the client signal is loaded into the payload of the signal frame of the intermediate frame, and the payload of the signal frame of the intermediate frame is loaded into the m time slots of the payload of the signal frame of the service signal.

In an embodiment, the first loading mode is a general mapping procedure, or the first loading mode is a simplified general mapping procedure.

In an embodiment, the second loading mode is an idle mapping procedure.

In an embodiment, the client signal is loaded into the payload of the signal frame of the service signal using a second loading mode in the following manner: the client signal is directly loaded into the payload of the signal frame of the service signal using the second loading mode; a second loading mode bit block is defined, and the second loading mode bit block corresponds to a predetermined number of consecutive bits in the payload of the signal frame of the service signal; the payload of p consecutive signal frames of the service signal is divided into q second loading mode bit blocks, where p and q are integers greater than 0; the second loading mode bit block includes a 1-bit idle flag, and the 1-bit idle flag indicates that the second loading mode bit block is configured to load bits of the client signal or as a padding bit block.

In an embodiment, the apparatus further includes the following components:
a first generation unit (not shown in the figure), configured to generate positioning information for indicating the idle mapping procedure bit block; and
a first storage unit (not shown in the figure), configured to store the positioning information in the overhead of the signal frame of the service signal.

In an embodiment, the client signal is loaded into the payload of the signal frame of the service signal using the second loading mode.

The client signal is loaded into the payload of the signal frame of the intermediate frame through the idle mapping procedure. An idle mapping procedure bit block is defined, and the idle mapping procedure bit block corresponds to a predetermined number of consecutive bits in the payload of the signal frame of the intermediate frame signal. The payload of the signal frames of p consecutive intermediate frame signals is divided into q idle mapping procedure bit blocks, where p and q are integers greater than 0. The idle mapping procedure bit block includes a 1-bit idle identifier, which indicates that the idle mapping procedure bit block is configured to load the bits of the client signal or as a padding bit block.

The payload of the intermediate frame signal is loaded into the payload of the signal frame of the service signal.

In an embodiment, the apparatus further includes the following components:
a second generation unit (not shown in the figure), configured to generate positioning information for indicating the idle mapping procedure bit block;
a second storage unit (not shown in the figure), configured to store the positioning information in the overhead of the signal frame of the intermediate frame; and
a signal processing unit (not shown in the figure), configured to load the overhead of the signal frame of the intermediate frame into the overhead of the signal frame of the service signal.

In an embodiment, when the client signal is directly loaded into the payload of the signal frame of the service signal, the loading mode identifier is stored in the overhead of the signal frame of the service signal.

Alternatively, when the client signal is loaded into the payload of the signal frame of the intermediate frame, the loading mode identifier is stored in the overhead of the signal frame of the intermediate frame signal, and the overhead of the signal frame of the intermediate frame is loaded into the overhead of the signal frame of the service signal.

In an embodiment, the client signal is loaded into the payload of the signal frame of the service signal using the first loading mode or the second loading mode.

The payload of the signal frame of the service signal is divided into n time slots, where n is an integer greater than 0.

Based on the signal rate of the client signal, m time slots are selected from the n time slots, where m is an integer greater than 0 and less than or equal to n.

The client signal is loaded into the m time slots of the payload of the signal frame of the service signal using the first loading mode, or the client signal is loaded into the m time slots of the payload of the signal frame of the service signal using the second loading mode.

In an embodiment, the step of loading the client signal into the m time slots of the payload of the signal frame of the service signal includes the following steps.

The client signal is directly loaded into the m time slots of the payload of the signal frame of the service signal.

Alternatively, the client signal is loaded into the payload of the signal frame of the intermediate frame, and the payload of the signal frame of the intermediate frame is loaded into the m time slots of the payload of the signal frame of the service signal.

In an embodiment, when the client signal is directly loaded into the payload of the signal frame of the service signal, the loading mode identifier is stored in the overhead of the signal frame of the service signal.

Alternatively, when the client signal is loaded into the payload of the signal frame of the intermediate frame, the loading mode identifier is stored in the overhead of the signal frame of the intermediate frame signal, and the overhead of the signal frame of the intermediate frame is loaded into the overhead of the signal frame of the service signal.

The signal processing apparatus provided in this embodiment can be the signal processing apparatus shown in FIG. 5, which can execute all the steps of the above-described signal processing methods, thereby achieving the technical effects of the above-described signal processing methods. For details, please refer to the above-described related descriptions. For the sake of brevity, it will not be repeated here.

FIG. 6 is a schematic structural diagram of an electronic device according to an embodiment of the present application. The electronic device 500 shown in FIG. 6 includes: at least one processor 501, a memory 502, at least one network interface 504, and other user interfaces 503. The various components in the electronic device 500 are coupled together through a bus system 505. It can be understood that the bus system 505 is used to realize the connection and communication between these components. In addition to a data bus, the bus system 505 also includes a power bus, a control bus, and a status signal bus. However, for clarity, all buses are labeled as the bus system 505 in FIG. 6.

The user interface 503 may include a display, keyboard, or clicking device (e.g., mouse, trackball, touchpad, or touchscreen).

It can be understood that the memory 502 in the embodiments of the present application can be volatile memory or non-volatile memory, or may include both volatile and non-volatile memory. The non-volatile memory can be read-only memory (ROM), programmable read-only memory (PROM), erasable programmable read-only memory (EPROM), electrically erasable programmable read-only memory (EEPROM), or flash memory. The volatile memory can be random access memory (RAM), which is used as an external cache. By way of example, but not limitation, many forms of RAM are available, such as static random access memory (SRAM), dynamic random access memory (DRAM), synchronous DRAM (SDRAM), double data rate SDRAM (DDRSDRAM), enhanced SDRAM (ESDRAM), synchronous link DRAM (SLDRAM), and direct rambus RAM (DRRAM). The memory 502 described herein is intended to include, but is not limited to, these and any other suitable types of memory.

In some embodiments, the memory 502 stores the following elements, executable units or data structures, or subsets thereof, or extended sets thereof: operating system 5021 and application program 5022.

The operating system 5021 includes various system programs, such as the framework layer, core library layer, and driver layer, used to implement various basic business functions and handle hardware-based tasks. The application program 5022 includes various applications, such as a media player and a browser, used to implement various application functions. Programs implementing the embodiment methods of the present application can be included in the application program 5022.

In this embodiment, by calling the program or instructions stored in the memory 502, specifically the program or instructions stored in the application program 5022, the processor 501 executes the method steps provided in each method embodiment, including, for example, the following steps.

If it is determined that the signal rate of the client signal is not adjusted, the client signal is loaded into the payload of the signal frame of the service signal using the first loading mode.

If it is determined that the signal rate of the client signal is adjusted, the client signal is loaded into the payload of the signal frame of the service signal using the second loading mode. After the duration of loading the client signal using the second loading mode is greater than or equal to a preset duration, the signal rate of the client signal is adjusted. After the signal rate of the client signal is adjusted, the client signal is loaded into the payload of the signal frame of the service signal using the first loading mode.

During the process of loading the client signal into the payload of the signal frame of the service signal, a loading mode identifier is determined. The loading mode identifier is used to identify whether the current mode of loading the client signal into the payload of the signal frame of the service signal is the first loading mode or the second loading mode.

The loading mode identifier is stored in the overhead of the signal frame of the service signal.

The methods disclosed in the embodiments of the present application can be applied to or implemented by a processor 501. The processor 501 may be an integrated circuit chip with signal processing capabilities. In the implementation process, each step of the above method can be completed by the integrated logic circuit of the hardware in the processor 501 or by instructions in the form of software. The processor 501 may be a general-purpose processor, a digital signal processor (DSP), an application-specific integrated circuit (ASIC), a field programmable gate array (FPGA), or other programmable logic devices, discrete gate or transistor logic devices, or discrete hardware components. It can implement or execute the methods, steps, and logic block diagrams disclosed in the embodiments of the present application. The general-purpose processor may be a microprocessor or any conventional processor. The steps of the method disclosed in the embodiments of the present application can be directly implemented by a hardware decoding processor, or implemented by a combination of hardware and software units in the decoding processor. The software units may be located in random access memory, flash memory, read-only memory, programmable read-only memory, electrically erasable programmable memory, registers, or other mature storage media in the art. The storage medium is located in the memory 502. The processor 501 reads the information in the memory 502 and, in conjunction with its hardware, completes the steps of the above method.

It can be understood that the embodiments described herein can be implemented in hardware, software, firmware, middleware, microcode, or a combination thereof. For hardware implementation, the processing unit can be implemented in one or more application-specific integrated circuits (ASICs), digital signal processors (DSPs), digital signal processing devices (DSPDs), programmable logic devices (PLDs), field-programmable gate arrays (FPGAs), general-purpose processors, controllers, microcontrollers, microprocessors, other electronic units for performing the functions described above, or combinations thereof.

For software implementation, the techniques described herein can be implemented by units that perform the functions described above. The software code can be stored in the memory and executed by a processor. The memory can be implemented in the processor or outside the processor.

The electronic device provided in this embodiment can be the electronic device shown in FIG. 6, which can execute all the steps of the signal processing methods described above, thereby achieving the technical effects of the signal processing methods described above. For details, please refer to the relevant descriptions above. For the sake of brevity, it will not be repeated here.

The embodiment of present application also provides a storage medium (computer-readable storage medium). This storage medium stores one or more programs. The storage medium may include volatile memory, such as random access memory; or may include non-volatile memory, such as read-only memory, flash memory, hard disk, or solid-state drive. The memory may also include combinations of the above types of memory.

When one or more programs in the storage medium can be executed by one or more processors to implement the signal processing method described above that is executed on the electronic device side.

The processor described above is used to execute signal processing programs stored in the memory to implement the steps of the signal processing method executed on the electronic device side.

If it is determined that the signal rate of the client signal is not adjusted, the client signal is loaded into the payload of the signal frame of the service signal using the first loading mode.

If it is determined that the signal rate of the client signal is adjusted, the client signal is loaded into the payload of the signal frame of the service signal using a second loading mode; after the duration of loading the client signal using the second loading mode is greater than or equal to a preset duration, the signal rate of the client signal is adjusted; after the signal rate of the client signal is adjusted, the client signal is loaded into the payload of the signal frame of the service signal using the first loading mode.

During the process of loading the client signal into the payload of the signal frame of the service signal, a loading mode identifier is determined. The loading mode identifier is configured to identify whether the current loading mode of the client signal into the payload of the signal frame of the service signal is the first loading mode or the second loading mode.

The loading mode identifier is stored in the overhead of the signal frame of the service signal.

Those skilled in the art will further recognize that the units and algorithm steps of the various examples described in conjunction with the embodiments disclosed herein can be implemented in electronic hardware, computer software, or a combination of both. To clearly illustrate the interchangeability of hardware and software, the components and steps of the various examples have been generally described in terms of functionality in the foregoing description. Whether these functions are implemented in hardware or software depends on the specific application and design constraints of the technical solution. Those skilled in the art can use different methods to implement the described functions for each specific application, but such implementation should not be considered beyond the scope of the present application.

The steps of the methods or algorithms described in conjunction with the embodiments disclosed herein can be implemented in hardware, a software module executed by a processor, or a combination of both. The software module can be located in random access memory (RAM), main memory, read-only memory (ROM), electrically programmable ROM, electrically erasable programmable ROM, registers, hard disk, removable disk, CD-ROM, or any other form of storage medium known in the art.

It should be understood that the terminology used herein is for the purpose of describing particular exemplary embodiments only and is not intended to be limiting. Unless the context clearly indicates otherwise, the singular forms "a," "an," and "the" as used herein may also include the plural forms. The terms "comprising," "including," "containing," and "having" are inclusive and therefore indicate the presence of the stated features, steps, operations, elements, and/or components, but do not exclude the presence or addition of one or more other features, steps, operations, elements, components, and/or combinations thereof. The method steps, processes, and operations described herein are not construed as requiring them to be performed in a particular order described or illustrated unless the order is explicitly specified. It should also be understood that additional or alternative steps may be used.

The above description is merely a specific embodiment of the present application, enabling those skilled in the art to understand or implement the present application. Various modifications to these embodiments will be readily apparent to those skilled in the art, and the general principles defined herein may be implemented in other embodiments without departing from the spirit or scope of the present application. Therefore, the present application is not to be limited to the embodiments shown herein, but is to be accorded the widest scope consistent with the principles and novel features claimed herein.

## Claims

1. A signal processing method, **characterized by** comprising:
in response to determining that a signal rate of a client signal remains unchanged, loading the client signal into a payload of a signal frame of a service signal using a first loading mode;
in response to determining that the signal rate of the client signal is adjusted, loading the client signal into the payload of the signal frame of the service signal using a second loading mode; after a duration of loading the client signal using the second loading mode is greater than or equal to a preset duration, adjusting the signal rate of the client signal; after the signal rate of the client signal is adjusted, loading the client signal into the payload of the signal frame of the service signal using the first loading mode;
determining, during a process of loading the client signal into the payload of the signal frame of the service signal, a loading mode identifier, wherein the loading mode identifier is configured to identify whether a current mode of loading the client signal into the payload of the signal frame of the service signal is the first loading mode or the second loading mode; and
storing the loading mode identifier in an overhead of the signal frame of the service signal.

2. The method according to claim 1, wherein, during a process of loading the client signal into the payload of the signal frame of the service signal using the second loading mode, in response to that the signal rate of the client signal is higher than a maximum rate provided by the second loading mode, bits of the client signal that cannot be loaded in time are saved using a buffer.

3. The method according to claim 2, wherein loading the client signal into the payload of the signal frame of the service signal using the first loading mode comprises:
in response to that, during a process of loading the client signal into the payload of the signal frame of the service signal using the second loading mode, the bits of the client signal that cannot be loaded in time are stored in the buffer, then after the signal rate of the client signal is adjusted, during a process of loading the client signal into the payload of the signal frame of the service signal using the first loading mode, increasing a loading rate of the first loading mode within a predetermined time range to load the bits of the client signal that cannot be loaded in time stored in the buffer into the payload of the signal frame of the service signal; after the predetermined time range ends, restoring the loading rate of the first loading mode so that the loading rate of the first loading mode is consistent with the signal rate of the client signal.

4. The method according to claim 1, wherein loading the client signal into the payload of the signal frame of the service signal using the first loading mode comprises:
loading the client signal directly into the payload of the signal frame of the service signal using the first loading mode to generate a first loading mode overhead; and
loading the first loading mode overhead into the overhead of the signal frame of the service signal.

5. The method according to claim 1, wherein loading the client signal into the payload of the signal frame of the service signal using the first loading mode comprises:
loading the client signal into a payload of a signal frame of an intermediate frame using the first loading mode to generate a first loading mode overhead; and
loading the first loading mode overhead into an overhead of the signal frame of the intermediate frame, loading the payload of the signal frame of the intermediate frame into the payload of the signal frame of the service signal, and loading the overhead of the signal frame of the intermediate frame into the overhead of the signal frame of the service signal.

6. The method according to claim 1, wherein loading the client signal into the payload of the signal frame of the service signal using the second loading mode comprises:
loading the client signal directly into the payload of the signal frame of the service signal using the second loading mode to generate a second loading mode overhead; and
loading the second loading mode overhead into the overhead of the signal frame of the service signal.

7. The method according to claim 1, wherein loading the client signal into the payload of the signal frame of the service signal using the second loading mode comprises:
loading the client signal into a payload of a signal frame of an intermediate frame using the second loading mode to generate a second loading mode overhead; and
loading the second loading mode overhead into the overhead of the signal frame of the intermediate frame, loading a payload of the signal frame of the intermediate frame into the payload of the signal frame of the service signal, and loading the overhead of the signal frame of the intermediate frame into the overhead of the signal frame of the service signal.

8. The method according to claim 1, wherein the client signal is loaded into the payload of the signal frame of the service signal using the first loading mode or the second loading mode in the following manner:
dividing the payload of the signal frame of the service signal into n time slots, where n is an integer greater than 0;
based on the signal rate of the client signal, selecting m time slots from the n time slots, where m is an integer greater than 0 and less than or equal to n; and
loading the client signal into the m time slots of the payload of the signal frame of the service signal using the first loading mode, or loading the client signal into the m time slots of the payload of the signal frame of the service signal using the second loading mode.

9. The method according to claim 8, wherein loading the client signal into the m time slots of the payload of the signal frame of the service signal comprises:
loading the client signal directly into the m time slots of the payload of the signal frame of the service signal; or
loading the client signal into a payload of a signal frame of an intermediate frame, and loading the payload of the signal frame of the intermediate frame into the m time slots of the payload of the signal frame of the service signal.

10. The method according to any one of claims 1 to 9, wherein the first loading mode is a general mapping procedure, or the first loading mode is a simplified general mapping procedure.

11. The method according to any one of claims 1 to 9, wherein the second loading mode is an idle mapping procedure.

12. The method according to claim 11, wherein the client signal is loaded into the payload of the signal frame of the service signal using the second loading mode in the following manner:
loading the client signal directly into the payload of the signal frame of the service signal through the idle mapping procedure, wherein an idle mapping procedure bit block is defined, and the idle mapping procedure bit block corresponds to a predetermined number of consecutive bits in the payload of the signal frame of the service signal; payloads of p consecutive signal frames of the service signal is divided into q idle mapping procedure bit blocks, where p and q are integers greater than 0; the idle mapping procedure bit block comprises a 1-bit idle identifier, and the 1-bit idle identifier indicates that the idle mapping procedure bit block is configured to load bits of the client signal or as a padding bit block.

13. The method according to claim 12, further comprising:
generating positioning information to indicate the idle mapping procedure bit block; and
storing the positioning information in the overhead of the signal frame of the service signal.

14. The method according to claim 11, wherein the client signal is loaded into the payload of the signal frame of the service signal using the second loading mode in the following manner:
loading the client signal into the payload of the signal frame of the intermediate frame through the idle mapping procedure, wherein an idle mapping procedure bit block is defined, and the idle mapping procedure bit block corresponds to a predetermined number of consecutive bits in the payload of the signal frame of the intermediate frame signal; payloads of signal frames of p consecutive intermediate frame signals are divided into q idle mapping procedure bit blocks, where p and q are integers greater than 0; the idle mapping procedure bit block comprises a 1-bit idle identifier, and the 1-bit idle identifier indicates that the idle mapping procedure bit block is configured to load bits of the client signal or as a padding bit block; and
loading the payload of the intermediate frame signal into the payload of the signal frame of the service signal.

15. The method according to claim 14, further comprising:
generating positioning information to indicate the idle mapping procedure bit block;
storing the positioning information in the overhead of the signal frame of the intermediate frame; and
loading the overhead of the signal frame of the intermediate frame into the overhead of the signal frame of the service signal.

16. The method according to any one of claims 1 to 9, wherein:
in response to that the client signal is directly loaded into the payload of the signal frame of the service signal, the loading mode identifier is stored in the overhead of the signal frame of the service signal, or,
in response to that the client signal is loaded into the payload of the signal frame of the intermediate frame, the loading mode identifier is stored in the overhead of the signal frame of the intermediate frame signal, and the overhead of the signal frame of the intermediate frame is loaded into the overhead of the signal frame of the service signal.

17. A signal processing apparatus, **characterized by** comprising:
a first processing unit;
a second processing unit; and
an overhead processing unit, wherein:
if it is determined that a signal rate of a client signal remains unchanged, the client signal is loaded into a payload of a signal frame of a service signal through the first processing unit;
the first processing unit is configured to:
load the client signal into the payload of the signal frame of the service signal using a first loading mode, and load the client signal into the payload of the signal frame of the service signal through the second processing unit if it is determined that the signal rate of the client signal is adjusted;
the second processing unit is configured to: load the client signal into the payload of the signal frame of the service signal using a second loading mode, adjust the signal rate of the client signal after a duration of loading the client signal using the second loading mode is greater than or equal to a preset duration, and load the client signal into the payload of the signal frame of the service signal using the first loading mode after adjusting the signal rate of the client signal; and
the overhead processing unit is configured to: determine a loading mode identifier during a process of loading the client signal into the payload of the signal frame of the service signal, wherein the loading mode identifier is configured to identify whether a current mode of loading the client signal into the payload of the signal frame of the service signal is the first loading mode or the second loading mode, and store the loading mode identifier in an overhead of the signal frame of the service signal.

18. An electronic device, **characterized by** comprising:
a memory, configured to store a computer program; and
a processor, configured to execute the computer program stored in the memory, wherein when the computer program is executed, the method according to any one of claims 1 to 16 is implemented.

19. A computer-readable storage medium, **characterized in that** a computer program is stored on the computer-readable storage medium, wherein when the computer program is executed by a processor, the method according to any one of claims 1 to 16 is implemented.
